# FASCICULE DE BREVET EUROPEEN

(11) **EP 1 146 771 B1**
(45) Date de publication et mention de la délivrance du brevet: **03.09.2003**
(21) Numéro de dépôt: 01400856.9
(22) Date de dépôt: 03.04.2001
(51) Int. Cl.: H04R 9/06, H04M 1/03, H04R 9/10

(54) **Téléphone mobile avec haut-parleur perfectionné**
Mobiltelefon mit einem verbesserten Lautsprecher
Mobile telephone with an improved loudspeaker

(30) Priorité: 03.04.2000 FR 0004239
(43) Date de publication de la demande: 17.10.2001
(73) Titulaire: SAGEM S.A., 75015 Paris (FR)
(72) Inventeur: Lothon, Christophe, 78700 Conflans Sainte Honorine (FR); Anciant, Marc, 92250 La Garenne Colombes (FR)
(74) Mandataire: Schmit, Christian Norbert Marie

(56) Documents cités:
- EP-A- 0 169 792
- EP-A- 0 471 990
- EP-A- 0 565 181
- US-A- 5 872 855

## Description

La présente invention a pour objet un téléphone mobile muni d'un haut-parleur perfectionné. Elle a pour but de rendre le fonctionnement d'un tel haut-parleur insensible à des perturbations électromagnétiques externes. Dans les téléphones mobiles, on utilise des haut-parleurs qui sont placés naturellement vers le haut de l'appareil, de façon à correspondre à la position d'une oreille d'un auditeur. L'antenne de rayonnement électromagnétique d'un tel téléphone mobile est également placée vers le haut de l'appareil. En pratique un circuit imprimé électrique formant une carte électronique est placée en regard du haut-parleur et achemine les signaux d'émission jusqu'à cette antenne. Au moment de la mise en service et de la reconnaissance du téléphone mobile par une station de base, ce téléphone mobile émet des signaux protocolaires sur la fréquence de balise de cette station de base, avec une puissance nominale, avant que cette station de base ne lui assigne une puissance d'émission moindre, en rapport avec son éloignement. Quand le téléphone mobile est loin de la station de base, la puissance d'émission est par ailleurs en permanence nominale.

Le signal électrique correspondant à cette reconnaissance protocolaire, de même que tous les signaux échangés, sont contenus dans des fenêtres temporelles de 577 microsecondes dans des trames de huit fenêtres dont la durée est de 4,615 millisecondes (en mode GSM TDMA Time Division Multiple Access - Accès multiple à répartition dans le temps). L'amplificateur de sortie radioélectrique du téléphone mobile est donc le siège d'une consommation impulsionnelle avec une fréquence de l'ordre de 217 Hz. Cette consommation forte engendre un bruit électromagnétique qui se propage dans le boîtier du téléphone mobile et qui, dans certains cas, conduit à une excitation mécanique parasite de la membrane du haut-parleur du téléphone mobile. L'utilisateur entend alors un bruit de cavalcade, au moins au moment de la reconnaissance. Ce bruit est gênant.

La perturbation constatée n'est pas une perturbation du signal audio qui alimente le haut-parleur (même si cette source intervient également), mais une induction de courant dans la bobine du haut-parleur, ce qui a pour effet de mettre en mouvement la bobine et la membrane du haut-parleur et donc de produire du bruit. Ce bruit est dit bruit de burst en référence aux enveloppes impulsionnelles des puissances consommées dans les fenêtres temporelles. Ainsi, lorsqu'on court-circuite le haut-parleur sur lui-même, sans aucun contact électrique avec le circuit imprimé, on perçoit le bruit de burst de la même manière. Sur certains téléphones mobiles, le problème est moins critique car le haut-parleur est relativement éloigné du circuit imprimé sur la carte électronique. Dans la mesure où il est difficile de prévoir la structure du champ magnétique rayonné par une carte électronique, ce genre de problème n'est décelable qu'au moment de l'intégration du haut-parleur dans le mobile, même si on sait qu'il est toujours préférable d'éloigner au maximum le haut-parleur des pistes radio à forte puissance.

En fonctionnement normal, on applique une tension U(t) aux bornes du haut-parleur. La bobine d'excitation de ce dernier est alors parcourue par un courant i, Cette bobine baigne par ailleurs dans un champ magnétique statique radial Bo créé par un aimant du haut-parleur. Il en résulte une force F appliquée à la bobine, appelée force de Laplace, et dont la valeur est donnée par: F = ilBo, I étant la longueur de fil de la bobine. Cette force est tantôt positive tantôt négative suivant le sens de parcours du courant dans la bobine. La bobine étant solidaire de la membrane du haut-parleur, l'ensemble bobine plus membrane est ainsi mis en mouvement.

En mode perturbé, la tension d'excitation a une origine différente. Un champ électromagnétique externe B(t), variable dans le temps, embrasse la bobine du haut-parleur et créé un flux magnétique 0e au travers de cette bobine, dont la valeur est donnée par 0e(t) = NSBe(t), où N est le nombre de spire de la bobine et S la surface d'une spire. Ce sont les variations dans le temps de ce flux qui génèrent une force électromotrice (une tension) e aux bornes de la bobine selon la relation e=-d0Jdt. Cette tension e voit en face d'elle une résistance électrique relativement faible (la résistance électrice du haut-parleur (R=8Ω) en série avec la résistance interne de l'amplificateur (r=8.Q.)). Donc un courant non négligeable traverse la bobine, ce qui active la membrane selon le même principe que celui évoqué précédemment. Une solution consistant à mettre une grosse résistance en série avec le haut-parleur a le mérite de supprimer les effets sensibles d'un tel bruit. Elle a cependant l'inconvénient de conduire à une alimentation audio surdimensionnée et consommatrice d'énergie.

L'invention a pour objet de remédier aux inconvénients cités en tirant parti du fait que des modes d'écoute discrète (avec le téléphone mobile porté à l'oreille) et mains libres (avec amplification additionnelle) sont imposés par l'utilisateur. On dispose alors simplement, du fait de cette imposition, d'une information pour configurer différemment le téléphone mobile selon le mode d'utilisation désiré. Dans ces conditions, dans l'invention on munit ce téléphone mobile d'un haut-parleur à double bobine. Une première bobine est à haute impédance et sert pour l'écoute discrète. Etant à haute impédance, elle favorise naturellement la diffusion des sons provenant du décodage des signaux transmis par le téléphone par rapport à la diffusion des bruits de burst. Il n'y a pas besoin d'adjoindre une résistance dans le circuit. Une deuxième bobine est une bobine basse impédance et sert pour l'écoute mains libres. Dans ce cas, les bruits de burst ne sont pas amortis. Cependant les sons provenant du décodage des signaux transmis étant amplifiés pour l'écoute mains libres, leur diffusion est favorisée par rapport à celle des bruits de burst. Il en résulte que la consommation électrique du téléphone mobile n'est pas augmentée en écoute mains libres du fait d'une résistance inutile qui aurait été ajoutée.

L'invention a donc pour objet un téléphone mobile comportant un circuit de traitement de la parole et un haut-parleur relié à ce circuit de traitement, le haut-parleur comportant une structure de maintien, une partie actionnée mobile par rapport à la structure de maintien, et une première bobine électrique d'excitation mécanique, caractérisé en ce qu'il comporte un commutateur à deux sorties, relié en entrée au circuit de traitement et, par ses deux sorties, à la première bobine électrique d'excitation mécanique et à une deuxième bobine électrique d'excitation mécanique.

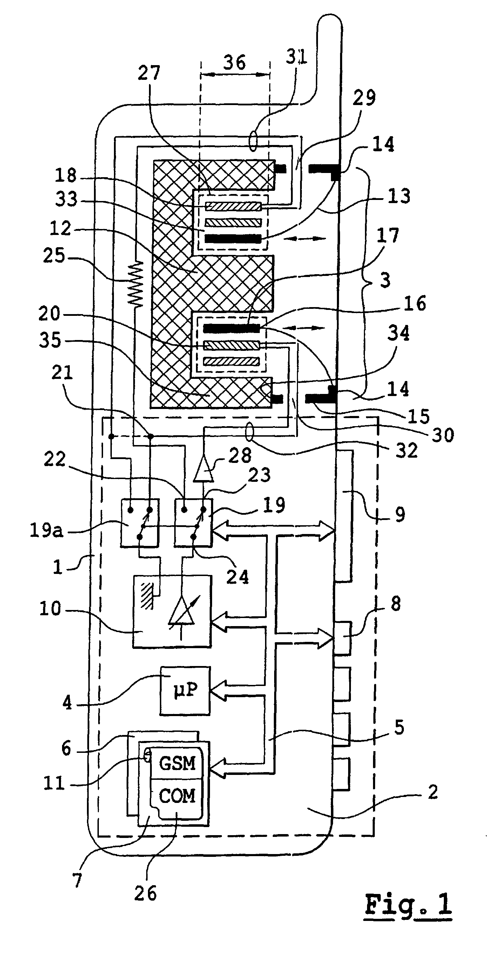

L'invention sera mieux comprise à la lecture de la description qui suit et à l'examen de la figure qui l'accompagne. Celles-ci ne sont présentées qu'à titre indicatif et nullement limitatif de l'invention. La figure 1 unique montre un téléphone mobile selon l'invention.

La figure 1 montre un téléphone mobile 1 conforme à l'invention. Le téléphone 1 comporte, d'une manière schématique, un circuit 2 (en tirets) de traitement de la parole et un haut-parleur 3. Dans un exemple préféré de réalisation, le circuit 2 comporte ici d'une manière conventionnelle, un microprocesseur 4 relié par un bus 5 à une mémoire 6 de données et 7 de programme, à un clavier 8, à un écran 9 ainsi qu'à des circuits d'amplification 10. Pour la mise en couvre d'une utilisation de téléphonie mobile, la mémoire 7 comporte un programme 11, intitulé ici GSM parce qu'il comporte toutes les instructions utiles pour mettre en couvre l'utilisation de téléphonie mobile. Le téléphone 1 comporte encore d'autres accessoires, par exemple tel qu'un microphone non représenté parce qu'indifférent dans l'invention. Les circuits d'amplification 10 alimentent électriquement le haut-parleur 3.

Le haut-parleur 3 comporte une structure de maintien 12, représentée par des hachures croisées et une membrane 13 jouant un rôle de partie actionnée mobile par rapport à la structure 12. La membrane 13 est circulaire de préférence. Elle est fixée, à une première extrémité circulaire 14, à une couronne 15 solidaire de la structure 12. A une autre extrémité 16 la membrane 13 est fixée à un noyau tubulaire 17. Dans un exemple le noyau 17 tubulaire s'engage autour d'un pilier central de la structure 12. Dans cet exemple préféré le noyau 17 et la structure 12 sont en matériaux magnétiques. En particulier la structure 12 sera un aimant permanent à structure circulaire et rayonnant un champ radial dans un entrefer où est placé le noyau 17. La membrane 13 est maintenue dans une position d'équilibre entre ses extrémités 14 et 16 du fait de sa propre raideur. Le haut-parleur 3 comporte par ailleurs une première bobine électrique 18 fixée au noyau 17 qui, quand elle est alimentée provoque sa propre excitation mécanique ainsi que celle du noyau 17. Sous l'effet des signaux électriques délivrés par l'amplificateur 10, la bobine 18 qui lui est raccordée est soumise à des déplacements correspondant au signal amplifié.

Dans l'invention le téléphone mobile est modifié de deux manières. D'une première manière, il comporte un commutateur 19, et d'une deuxième manière il comporte une deuxième bobine électrique d'excitation mécanique 20. La bobine 20 est bobinée en parallèle avec la première bobine, ici d'une manière préférée montrée par des tirets, entre un noeud électrique commun 21, par exemple ici la masse, et chacune des deux sorties respectivement 22 et 23 du commutateur 19. Pour se passer d'un noeud électrique commun 21, il suffirait de remplacer le commutateur 19 par un commutateur double, 19 et 19a à deux fois deux sorties, des premières sorties étant reliées à une bobine, des deuxièmes sorties étant reliées à l'autre bobine. Les deux commutateurs 19 et 19a sont alors commandés en commun. En entrée, le commutateur 19 est relié à la sortie d'amplification de l'amplificateur 10. Le commutateur 19 à deux sorties est donc capable d'acheminer sur une de ses sorties, en fonction d'une commande transmise par le bus 5, un signal électrique reçu sur son entrée 24. Les deux bobines 18 et 20 sont prévues pour adopter des comportements différents en présence d'un signal électrique qui les excite. Par exemple la première bobine 18 sera une bobine haute impédance alors que la deuxième bobine 20 sera une bobine basse impédance. La deuxième bobine 20 est mécaniquement fixée à la première bobine 18 et au noyau 17.

Cette différence d'impédance peut être réalisée en pratique en disposant dans la première bobine 18 un nombre de spires supérieur au nombre de spires de la deuxième bobine 20. Par exemple le nombre de spires de la première bobine sera de 64 alors que le nombre de spires de la deuxième bobine 20 sera de 32. En outre, pour augmenter la résistance de la première bobine 18, un fil conducteur utilisé pour la première bobine 18 aura de préférence un diamètre deux fois moins grand que le diamètre du fil utilisé pour la deuxième bobine 20. Par exemple ce diamètre sera de 30 micromètres et 60 micromètres respectivement. Ce faisant, notamment en combinant les deux solutions, on aboutit au résultat que l'impédance présentée par la première bobine sera 8 fois plus élevée que l'impédance présentée par la deuxième bobine. En effet le rapport de 2 des nombres de spires et de 4 résultant de la comparaison des diamètres (puisque la résistivité est inversement proportionnelle à la surface de la section des fils) conduit à ce rapport de 8. En outre, pour augmenter la résistance de la bobine haute impédance 18 on peut prévoir de lui adjoindre en série une résistance 25 discrète ou répartie. On peut alors obtenir une deuxième bobine 20 avec une impédance de 8 ohms alors que la première bobine 18 aura une impédance de 120 ohms environ (8 ohms fois 8 plus 60 ohms de résistance 25).

Le fonctionnement du téléphone 1 est alors le suivant. En fonction d'une commande appliquée par un utilisateur sur une touche du clavier 8, et en application d'un programme 26 de commutation contenu dans la mémoire programme 7, le microprocesseur 4 force le commutateur 19 à alimenter la sortie 22 ou la sortie 23. Lorsqu'il alimente la sortie 22, pour une écoute discrète, le signal disponible à la sortie de l'amplificateur 10 attaque la première bobine 18. L'amplification de l'amplificateur 10 est suffisante pour que la vibration de la membrane 13 corresponde à une écoute discrète. Eventuellement l'amplificateur 10 peut être réglable par l'utilisateur en fonction de son confort désiré d'écoute. On se trouve alors dans une configuration haute impédance, correspondant à celle de l'état de la technique dans laquelle on résout le problème de bruit de burst par augmentation de l'impédance. En pratique, on obtient dans ce cas une pression acoustique rayonnée par volt faible. Dans ce cas, l'amplificateur 10 doit appliquer des tensions fortes sur la bobine 18. Comparativement, les bruits de burst sont alors relativement réduits: ils sont équivalents à des excitations de tension d'amplitude fixe. Dans ces conditions on ne les entend pas. C'est pour ce type d'écoute le but à atteindre.

Dans l'autre cas, lorsque la deuxième bobine 20 est alimentée, cette bobine 20 possède une basse impédance. Par exemple l'impédance de la bobine 20 sera de l'ordre de 8 ohms (impédance normalisée). Pour une tension donnée d'excitation cette bobine est parcourue par un courant fort. Elle produit un son élevé utilisable en utilisation mains libres. La bobine 20 est également sensible aux inductions radiofréquence des bursts. Mais comme le niveau du signal électrique audio est alors amplifié, beaucoup plus fort relativement, les bruits radiofréquences ne sont plus perceptibles. On aboutit là encore au résultat recherché que les bruits de burst sont masqués. Pour la réalisation, les bobines 18 et 20 sont mobiles et fixées ensemble sur le noyau 17. Les bobines sont emboîtées l'une dans l'autre. L'ensemble est mobile au fond d'une rainure circulaire 27 de la structure 12. La rainure 27 entoure un massif central de l'aimant 12. Dans cette solution préférée, l'ensemble des deux bobines présente plus d'inertie (du fait du double poids). L'effet de masse supplémentaire est alors bénéfique pour résister aux bruits de burst.

En agissant ainsi on réalise deux haut-parleurs en un seul, donc on réduit notablement le coût du téléphone mobile. Pour un même haut-parleur, double, on est capable de dispenser une écoute discrète et une écoute mains libres.

En résumé, dans les deux cas, écoute discrète ou écoute mains libres, les effets de burst retentissent, à nombre de spires égal, en une même force électromotrice parasite appliquée à la bobine. Dans le cas de l'écoute discrète, où la tension applicable par l'amplificateur 10 aurait été faible (pour diffuser un son faible), on augmente artificiellement la contribution d'excitation des sons résultant du décodage dans le téléphone mobile par rapport à la contribution résultant des parasites en augmentant tout simplement l'impédance de la première bobine 18. De ce point de vue le changement de diamètre des fils et l'adjonction d'une résistance 25 en série sont prépondérants. Il suffit simplement de dimensionner l'amplificateur 10 pour qu'il puisse débiter une haute tension, par exemple 24 volts crête à crête. Dans l'autre cas, on est naturellement dans une situation où la tension d'excitation utile est élevée puisqu'on est en écoute mains libres. Et par conséquent les bruits de burst sont relativement réduits.

L'utilisation d'un commutateur 19 est par ailleurs avantageuse. En effet, selon la position du commutateur 19, une des deux entrées 22 ou 23 est connectée à une bobine, et l'autre est en l'air. L'entrée en l'air n'est pas connectée. La bobine avec une entrée en l'air forme néanmoins un dispositif rayonnant. Le fait qu'une des bobines soit en l'air pendant que l'autre est en service pourrait conduire en la naissance d'excitations mécaniques par cette autre bobine. On observe à cet effet, d'une manière paradoxale un couplage faible entre les deux bobines, alors qu'elles sont en pratique bobinées l'une sur l'autre. Il est de l'ordre de -10 dB lorsqu'une bobine est en service et il est de l'ordre de -30 dB lorsque l'autre bobine est en service. Cette faiblesse paradoxale du couplage est liée en fait à ce que les deux bobines sont solidaires l'une de l'autre et sont bobinées de préférence dans un sens inverse l'une de l'autre. Dans la pratique le couplage magnétique est compensé par un couplage mécanique qui résulte du fait que, pour une bobine, être entraînée en mouvement dans l'aimant permanent de la structure 12 implique alors une tension qui va en sens inverse de la tension parasite née dans l'autre bobine.

Entre le bobinage de la deuxième bobine 20 par écoute mains libres et la sortie 23 du commutateur, de préférence on place un amplificateur 28. L'amplificateur 28 est chargé de l'amplification mains libres. Les raisons de cette disposition sont les suivantes. Un commutateur tel que 19 présente toujours une certaine résistance en série, de l'ordre de 4 ohms. Dans le cas de l'écoute amplifiée, si l'amplificateur 10 devait à lui seul produire la puissance à dissiper dans le haut-parleur 3, il devrait avoir une impédance interne de 12 ohms (8 ohms pour la bobine 20 et 4 ohms pour le commutateur 19). On consommerait donc bien plus que n'est amené à consommer l'amplificateur 28. Ce dernier ne doit être adapté que pour posséder une impédance interne de 8 ohms puisqu'il attaque directement la deuxième bobine 20. Dans ce cas, l'amplificateur 28 effectue par ailleurs une transformation d'impédance: il possède une impédance d'entrée de l'ordre de 120 ohms ou plus et une impédance de sortie de 8 ohms. Par comparaison l'amplificateur 10 possède une impédance de sortie de l'ordre de 120 ohms dans l'exemple.

Sur le plan structurel, la couronne 15 est percée de deux orifices 29 et 30 pour laisser passer des couples de fils, respectivement 31 et 32. Ces couples 31 et 32 de fils sont raccordés chacun aux extrémités des bobines respectivement 18 et 20. La réalisation du haut-parleur 3 est la suivante. On bobine les bobines 18 et 20 autour du noyau 17 en faisant en sorte que les couples de fils 31 et 32 respectivement sortent sur une même face, en étant de préférence diamétralement opposés, d'un bloc cylindrique circulaire 33 qui les contient. En même temps qu'on fixe un pavillon jouant le rôle de membrane 13 sur le bloc 33, on fait passer les couples 31 et 32 de fils dans les trous 29 et 30 réalisés dans la couronne 15 accrochée à l'autre extrémité de la membrane circulaire 13. Par son socle circulaire 34, la couronne 15 est ensuite fixée sur un mur extérieur circulaire 35 de la structure 12. Pour que chaque bobine soit alimentée par un couple de brins débouchant côte à côte, elle comporte dans sa hauteur 36 une première nappe bobinée de haut en bas en série avec une deuxième nappe bobinée de bas en haut. Pour que les couples de brins débouchent en opposition diamétrale, il suffit de tourner une bobine de 180° à l'intérieur de l'autre. Le haut-parleur 3 est ensuite fixé par la structure 12 au boîtier du téléphone 1.

## Revendications

1. Téléphone mobile (1) comportant un circuit (2) de traitement de la parole et un haut-parleur (3) relié à ce circuit de traitement, le haut-parleur comportant une structure (12) de maintien, une partie (13) actionnée mobile par rapport à la structure de maintien, et une première bobine (18) électrique d'excitation mécanique, **caractérisé en ce qu'**il comporte un commutateur (19) à deux sorties (22, 23), relié en entrée (24) au circuit (10) de traitement et, par ses deux sorties, à la première bobine électrique d'excitation mécanique et à une deuxième bobine (20) électrique d'excitation mécanique.

2. Téléphone selon la revendication 1, **caractérisé en ce que** les bobines sont fixes par rapport à un noyau (17) tubulaire mobile entre la structure de maintien et les bobines.

3. Téléphone selon la revendication 2, **caractérisé en ce que** la partie actionnée comporte une membrane du haut-parleur, cette membrane étant fixée d'une part (14) à une couronne (15) solidaire de la structure de maintien et d'autre part (16) à ce noyau.

4. Téléphone selon l'une des revendications 1 à 3, **caractérisé en ce que** la deuxième bobine est emboîtée dans la première bobine, **en ce que** la première et la deuxième bobine comportent chacune un couple (31, 32) de brins d'alimentation débouchant côte à côte, le couple de brins de la première bobine débouchant sur une face de la première bobine située du même coté par rapport à cette première bobine que la face de la deuxième bobine où débouche le couple de brins de cette deuxième bobine.

5. Téléphone selon la revendication 4, **caractérisé en ce que** les couples de brins débouchent en opposition diamétrale (29,30) l'un de l'autre sur cette face.

6. Téléphone selon l'une des revendications 1 à 5, **caractérisé en ce que** la première bobine comporte deux fois plus de spire que la deuxième bobine.

7. Téléphone selon l'une des revendications 1 à 6, **caractérisé en ce que** des spires de la première bobine sont formées par des fils dont le diamètre est la moitié du diamètre de fils de spires de la deuxième bobine.

8. Téléphone selon l'une des revendications 1 à 7, **caractérisé en ce que** des spires de la première bobine sont en série avec une résistance (25) discrète.

9. Téléphone selon l'une des revendications 1 à 8, **caractérisé en ce que** des spires de la deuxième bobine sont raccordées au commutateur par l'intermédiaire d'un amplificateur (28) interposé.

10. Téléphone selon l'une des revendications 1 à 9 **caractérisé en ce que** la deuxième bobine est bobinée en parallèle avec la première bobine entre un noeud électrique (21)commun et les deux sorties du commutateur à deux sorties.

## Patentansprüche

1. Mobiltelefon (1) mit einem Schaltkreis (2) zur Sprachverarbeitung und einem Lautsprecher (3), der an den Schaltkreis angeschlossen ist, wobei der Lautsprecher eine Haltestruktur (12), einen gegenüber der Haltestruktur frei beweglichen Aktivteil (13) und eine erste elektromechanische Erregerspule (18) umfasst, **dadurch gekennzeichnet, dass** das Telefon weiter einen Schalter (19) mit zwei Ausgängen (22, 23) umfasst, der eingangsseitig (24) mit dem Verarbeitungsschaltkreis (10) und ausgangsseitig mit der ersten elektro-mechanischen Erregerspule und mit einer zweiten elektro-mechanischen Erregerspule (20) verbunden ist.

2. Mobiltelefon nach Anspruch 1, **dadurch gekennzeichnet, dass** die Spulen auf einem rohrförmigen, gegenüber den Spulen und der Haltestruktur beweglichen Kern (17) angeordnet sind.

3. Mobiltelefon nach Anspruch 2, **dadurch gekennzeichnet, dass** der Aktivteil eine Membran des Lautsprechers umfasst, die einerseits (14) an einem Kranz (15) befestigt ist, der fest mit der Haltestruktur verbunden ist, und andererseits (16) an dem Kern.

4. Mobiltelefon nach einem der Ansprüche 1 bis 3, **dadurch gekennzeichnet, dass** die zweite Spule in die erste Spule eingefügt ist, dass die erste und die zweite Spule jeweils ein Paar (31, 32) Versorgungskabel aufweisen, die nebeneinander liegen, wobei das Leitungspaar der ersten Spule zur einen Seite der ersten Spule führt, die in Bezug auf die erste Spule auf derselben Seite liegt wie die Seite der zweiten Spule, zu der das Leitungspaar der zweiten Spule führt.

5. Mobiltelefon nach Anspruch 4, **dadurch gekennzeichnet, dass** die Leitungspaare in einander diametral entgegengesetzte Richtungen (29, 30) auf dieser Seite führen.

6. Mobiltelefon nach einem der Ansprüche 1 bis 5, **dadurch gekennzeichnet, dass** die erste Spule doppelt so viele Windungen aufweist wie die zweite Spule.

7. Mobiltelefon nach einem der Ansprüche 1 bis 6, **dadurch gekennzeichnet, dass** die Windungen der ersten Spule durch Drähte gebildet sind, deren Durchmesser halb so groß ist wie der Durchmesser der Drähte der Windungen der zweiten Spule.

8. Mobiltelefon nach einem der Ansprüche 1 bis 7, **dadurch gekennzeichnet, dass** die Windungen der ersten Spule in Reihe geschaltet sind mit einem Widerstand (25).

9. Mobiltelefon nach einem der Ansprüche 1 bis 8, **dadurch gekennzeichnet, dass** die Windungen der zweiten Spule mit dem Schalter über einen zwischengeschalteten Verstärker (28) verbunden sind.

10. Mobiltelefon nach einem der Ansprüche 1 bis 9, **dadurch gekennzeichnet, dass** die zweite Spule parallel zur ersten Spule zwischen einem gemeinsamen elektrischen Knotenpunkt (21) und den beiden Ausgängen des Schalters mit zwei Ausgängen angeordnet ist.

## Claims

1. Mobile telephone (1) including a speech processing circuit (2) and a loud-speaker (3) connected to this processing circuit, the loud-speaker including a support structure (12), an actuated part (13) which is moveable relative to the support structure and a first mechanical excitation electrical coil (18), **characterised *by*** *the fact* that it includes a switch (19) with two outputs (22, 23) and connected at its input (24) to the processing circuit (10) and, by its two outputs, to the first mechanical excitation electrical coil and to a second mechanical excitation electrical coil (20).

2. Telephone as described in claim 1, ***characterised by** the fact that* the coils are fixed relative to a tubular core (17) moveable between the support structure and the coils.

3. Telephone as described in claim 2, ***characterised by** the fact that* the actuated part includes a loud-speaker diaphragm, this diaphragm being fixed on the one hand (14) to a ring (15) firmly attached to the support structure and on the other (16) to this core.

4. Telephone as described in one of claims 1 to 3, ***characterised by** the fact that* the second coil is nested in the first coil, and by the fact that the first and the second coil each include a pair (31, 32) of power supply leads emerging side by side, the pair of leads of the first coil emerging on a face of the first coil situated on the same side relative to this first coil as the face of the second coil where the pair of leads of this second coil emerges.

5. Telephone as described in claim 4, ***characterised by** the fact that* the pairs of leads emerge on this face in diametric opposition (29, 30) one to the other.

6. Telephone as described in one of claims 1 to 5,
***characterised by** the fact that* the first coil includes two times more turns than the second coil.

7. Telephone as described in one of claims 1 to 6, ***characterised by** the fact that* turns of the first coil are formed by wires the diameter of which is half the diameter of wires of turns of the second coil.

8. Telephone as described in one of claims 1 to 7, ***characterised by** the fact that* turns of the first coil are in series with a discrete resistance (25).

9. Telephone as described in one of claims 1 to 8, ***characterised by** the fact that* turns of the second coil are connected to the switch via an interposed amplifier (28).

10. Telephone as described in one of claims 1 to 9, ***characterised by** the fact that* the second coil is wound in parallel with the first coil between a common electrical node (21) and the two outputs of the switch with two outputs.
